# FASCICULE DE BREVET EUROPEEN

(11) **EP 2 637 978 B1**
(45) Date de publication et mention de la délivrance du brevet: **25.12.2019**
(21) Numéro de dépôt: 11779408.1
(22) Date de dépôt: 08.11.2011
(51) Int. Cl.: C03B 37/027, C03B 37/03

(54) **DISPOSITIF DE GUIDAGE DE FIBRE OPTIQUE AMELIORE**
VERBESSERTE GLASFASERFÜHRUNG
IMPROVED OPTICAL FIBER GUIDE DEVICE

(30) Priorité: 08.11.2010 FR 1059215
(43) Date de publication de la demande: 18.09.2013
(73) Titulaire: Conductix Wampfler France, 92700 Colombes (FR)
(72) Inventeur: CORSO, François, F-01510 St-Martin-de-Bavel (FR)
(74) Mandataire: Regimbeau
(86) Numéro de dépôt international: PCT/EP2011/069584
(87) Numéro de publication internationale: WO 2012/062719

(56) Documents cités:
- US-A1- 2001 020 374
- US-A1- 2004 232 571
- US-A1- 2006 133 751

## Description

L'invention concerne les dispositifs de fabrication d'une fibre optique. Plus particulièrement l'invention concerne les dispositifs de torsion d'une fibre optique lors d'un procédé de fabrication de ladite fibre optique. Le document US2004/0232571 divulgue un dispositif de guidage d'une fibre optique similaire, ayant deux poulies de torsion.

En référence à la figure 1 (tirée du document US 5,418,881), un procédé de fabrication d'une fibre optique connu de l'état de la technique comprend un four 12 dans lequel est chauffé du verre, préférentiellement sous la forme d'une préforme (barreau de verre). Le four est généralement situé en hauteur, préférentiellement en haut d'une tour T d'une hauteur allant généralement de 20 à 35 mètres.

Le four 12 comprend un orifice de sortie 120 situé dans une partie basse du four 12 en regard du bas de la tour. De cet orifice 120 sort un filin 13 de verre partiellement fondu (c'est-à-dire dont la rhéologie permet de pouvoir couler à travers cet orifice). Ce filin de verre forme la fibre optique.

En dessous du four est situé un dispositif de refroidissement 14 au travers duquel la fibre optique est refroidie.

Une fois la fibre optique 13 refroidie, elle continue son parcours vers le bas dans des stations de traitement supplémentaire 15, 16, 17 et 18 situées en aval, pour le gainage par exemple.

Ensuite la fibre optique 13 est prise en charge par une ou plusieurs poulie(s) de renvoi jusqu'à un enrouleur permettant d'enrouler la fibre autour d'une bobine, qui servira ultérieurement au transport et à la livraison de ladite bobine. Ainsi, lors de l'installation de la fibre, il suffira de dérouler la fibre optique de la bobine.

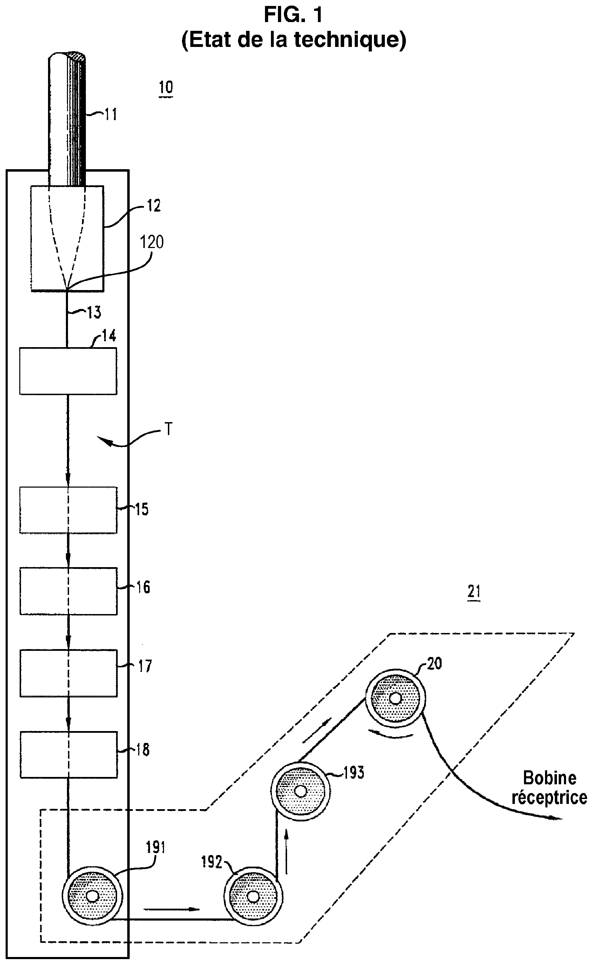

De retour à la figure 1, il est connu un procédé de torsion de la fibre, dont le but est de réduire la Dispersion Modale de Polarisation ou « PMD » pour « Polarization Mode Dispersion » en termes anglo-saxons. Ce procédé consiste à faire subir une torsion à la fibre 13 afin de répartir plus régulièrement le long de la fibre les éventuelles imperfections de la fibre 13 afin de ne pas détériorer sa qualité. En effet, l'accumulation d'imperfections dans un endroit localisé de la fibre détériore passablement sa bande passante.

Les figures 2a, 2b et 2c (tirées du document US 6,324,872) représentent un dispositif de guidage d'une fibre optique 32 connu de l'état de la technique, destiné à être monté sur une tour verticale T de fabrication de fibre optique 32. La fibre optique 32 est générée à partir du four 24 situé en partie haute de la tour T et est en déplacement vertical par rapport à la tour T, vers le bas. Le dispositif de guidage est situé en aval du four 24 et comprend :
- une première poulie de guidage 76,
- un galet 60, situé en aval de la première poulie 76 de guidage et dont l'axe de rotation 62 présente un angle par rapport à l'horizontale. Le galet 60 est en rotation autour de l'axe 62 de sorte que la surface 64 du galet est en contact avec la fibre optique 32 et engendre une force de friction D dont une composante C_{T} est horizontale. La composante C_{T} horizontale provoque en conséquence une torsion de la fibre optique 32, c'est-à-dire une rotation de la fibre 32 autour d'elle-même (autour de son axe principal Y qui lui est vertical),
- une seconde poulie 78 de guidage, située en aval du galet 60 de torsion de la fibre 32.

Bien que ce dispositif connu de l'état de la technique permette effectivement d'engendrer une torsion au sein de la fibre 32, des critiques ont été émises à son encontre.

En effet, les torsions engendrées ont tendance à se propager en amont mais également en aval jusqu'à l'enroulement de la fibre. La fibre est alors enroulée avec ces torsions, ce qui provoque des forces internes rendant difficile, voire impossible, l'enroulement de la fibre mais également provoque des détériorations sur le long terme de la fibre ainsi enroulée.

Un but de la présente invention est de fournir un dispositif de guidage de fibre optique permettant de surmonter cet inconvénient.

Plus précisément, le but de la présente invention est de fournir un dispositif de guidage d'une fibre optique permettant d'engendrer des torsions au sein de ladite fibre qui se propagent en amont de la fibre, mais de réduire ou limiter la propagation des torsions vers l'aval.

A cet effet, l'invention concerne un dispositif de guidage d'une fibre optique, destiné à être monté sur une tour verticale de fabrication d'une fibre optique, la fibre étant générée à partir d'un four situé en partie haute de la tour et étant en déplacement vertical par rapport à la tour, vers le bas, le dispositif de guidage étant situé en aval du four, le dispositif comprenant :
- une première poulie de guidage,
- au moins une surface de torsion de la fibre située en aval de la première poulie de guidage,
- une seconde poulie de guidage située en aval de la au moins une surface de torsion de la fibre, et
- une poulie de renvoi,
la distance entre la première poulie de guidage et la au moins une surface de torsion de la fibre étant supérieure à la distance entre la au moins une surface de torsion de la fibre et la seconde poulie, le dispositif étant caractérisé en ce qu'il comprend en outre une deuxième surface de torsion de la fibre optique, les deux surfaces de torsion de la fibre optique étant les deux flancs d'une rainure formée dans une même poulie de torsion, et en ce que la poulie de torsion est agencée sur le bras d'un servomoteur de sorte que l'axe de rotation de ladite poulie peut être commandé en rotation autour d'un axe horizontal.

Un but de la présente invention est de fournir un dispositif de guidage de fibre optique permettant de surmonter cet inconvénient.

Plus précisément, le but de la présente invention est de fournir un dispositif de guidage d'une fibre optique permettant d'engendrer des torsions au sein de ladite fibre qui se propagent en amont de la fibre, mais de réduire ou limiter la propagation des torsions vers l'aval.

A cet effet, l'invention concerne un dispositif de guidage d'une fibre optique selon la revendication 1.

Avantageusement mais facultativement, l'invention comprend au moins l'une des caractéristiques additionnelles suivantes :
- le rapport entre la distance entre la première poulie de guidage et la au moins une surface de torsion de la fibre et la distance entre la au moins une surface de torsion de la fibre et la seconde poulie est compris entre 2 et 20,
- la seconde poulie et la poulie de renvoi sont confondues,
- l'angle qui sépare les deux flancs est compris entre 50° et 120°,
- le diamètre de la poulie de torsion et le diamètre de la seconde poulie sont de même valeur,
- le servomoteur est agencé sur une liaison glissière de sorte que l'axe de rotation de la poulie peut être commandé en translation horizontale par rapport à la tour de fabrication de la fibre optique,
- le servomoteur comprend une unité de commande apte à commander la rotation de l'axe de rotation de la poulie selon au moins l'un des modes suivants, la position de l'axe de rotation de la poulie étant caractérisée par un angle par rapport à un axe horizontal:
   ∘ l'angle est fixe au cours du temps,
   ∘ l'angle présente au cours du temps un créneau de largeur variable mais d'amplitude fixe,
   ∘ l'angle présente au cours du temps un créneau de largeur variable et d'amplitude variable aléatoirement,
   ∘ l'angle présente au cours du temps une sinusoïde de pulsation variable mais d'amplitude fixe,
   ∘ l'angle présente au cours du temps une sinusoïde de pulsation variable et d'amplitude variable.

D'autres caractéristiques, buts et avantages de la présente invention apparaîtront à la lecture de la description détaillée qui va suivre d'un exemple non limitatif de mise en œuvre, donnée au regard des figures annexées sur lesquelles :
- la figure 1 représente schématiquement une tour de fabrication d'une fibre optique selon l'état de la technique,
- la figure 2a est une représentation cavalière d'un dispositif de guidage selon l'état de la technique,
- la figure 2b est une représentation en coupe 2-2 du dispositif de la figure 2a,
- la figure 2c est une représentation en coupe 3-3 du dispositif de la figure 2a,
- la figure 3 est une représentation schématique d'un dispositif de guidage selon un mode de réalisation particulier de la présente invention,
- la figure 4 est une représentation d'une poulie de torsion d'un dispositif de guidage selon un mode de réalisation particulier de la présente invention,
- la figure 5 est une représentation schématique d'une poulie de torsion commandée selon un mode de réalisation particulier de la présente invention,
- la figure 6 représente des modes différents de commande d'une poulie de torsion selon un mode de réalisation particulier de la présente invention, et
- la figure 7 est une représentation schématique d'un dispositif de guidage selon un autre mode de réalisation particulier de la présente invention.

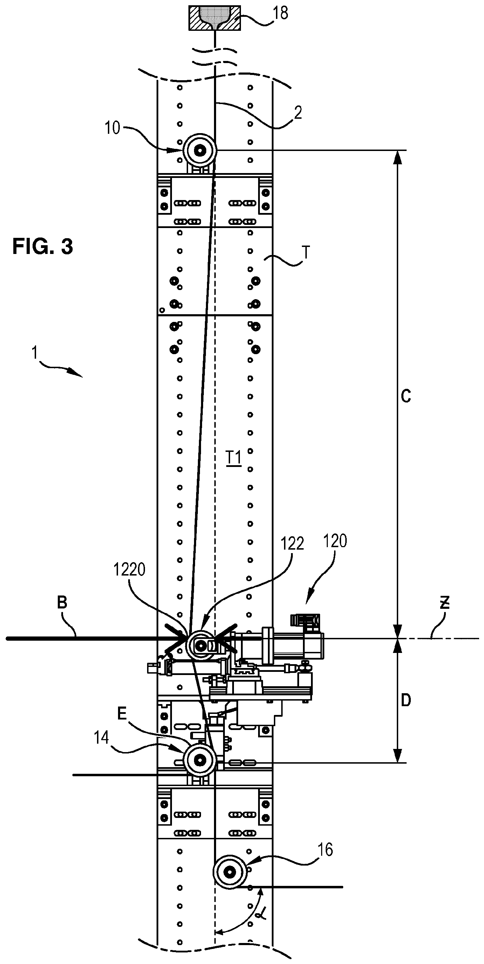

En référence à la figure 3, un dispositif de guidage d'une fibre optique selon un mode de réalisation particulier de la présente invention est destiné à être monté sur une tour verticale T de fabrication d'une fibre optique 2, la fibre étant générée à partir d'un four 18 situé en partie haute de la tour T et étant en déplacement vertical par rapport à la tour T vers le bas. La vitesse de fibrage (vitesse de défilement de la fibre 2) est comprise entre 1 et 3000 m/min. Le dispositif de guidage 1 est situé en aval du four 18 et une ou plusieurs stations de traitement de la fibre peuvent être situées entre le four et le dispositif de guidage 1, comme par exemple une station de gainage. Le dispositif de guidage de la fibre optique comprend :
- une première poulie de guidage 10 ; celle-ci est préférentiellement montée en rotation autour d'un axe horizontal et de sorte que ses flancs latéraux soient parallèles à la face avant T1 de la tour T. Cette première poulie 10 est située de telle sorte que la direction de la fibre en amont de la poulie est verticale. La poulie 10 est préférentiellement du type comprenant une rainure sur la périphérie de la poulie, destinée à accueillir la fibre 2 ;
- au moins une surface 1220 de torsion de la fibre 2 située en aval de la première poulie de guidage 10 (cette surface sera décrite plus en détail ultérieurement) ;
- une seconde poulie 14 de guidage située en aval de la surface 1220 de torsion de la fibre 2. Cette poulie est préférentiellement du même type que la première poulie 10 et est montée en rotation autour d'un axe horizontal et de sorte que ses flancs latéraux soient parallèles à la face avant T1 de la tour T. De plus, la seconde poulie 14 est montée de sorte que son axe de rotation soit parallèle de l'axe de rotation de la première poulie 10, préférentiellement appartenant à un même plan vertical,
- une poulie de renvoi 16, préférentiellement du même type que les première et seconde poulies 10 et 14 et permettant de renvoyer la fibre avec un angle α par rapport à l'axe vertical Y, α étant préférentiellement compris entre 75°C et 120°C (en valeur absolue).

Selon une caractéristique de la présente invention, la distance C entre la première poulie de guidage 10 et la surface de torsion de la fibre 1220 est supérieure à la distance D entre la surface de torsion de la fibre 1220 et la seconde poulie 14 de guidage. Plus préférentiellement, le rapport entre la distance C séparant la première poulie de guidage 10 de la surface de torsion de la fibre 1220 et la distance D séparant la surface de torsion de la fibre 1220 de la seconde poulie 14 est compris entre 2 et 20. Plus préférentiellement encore, pour une hauteur de tour T comprise entre 20 m et 30 m, la distance C est comprise entre 800 mm et 2500 mm et la distance D est comprise entre 150 mm et 400 mm.

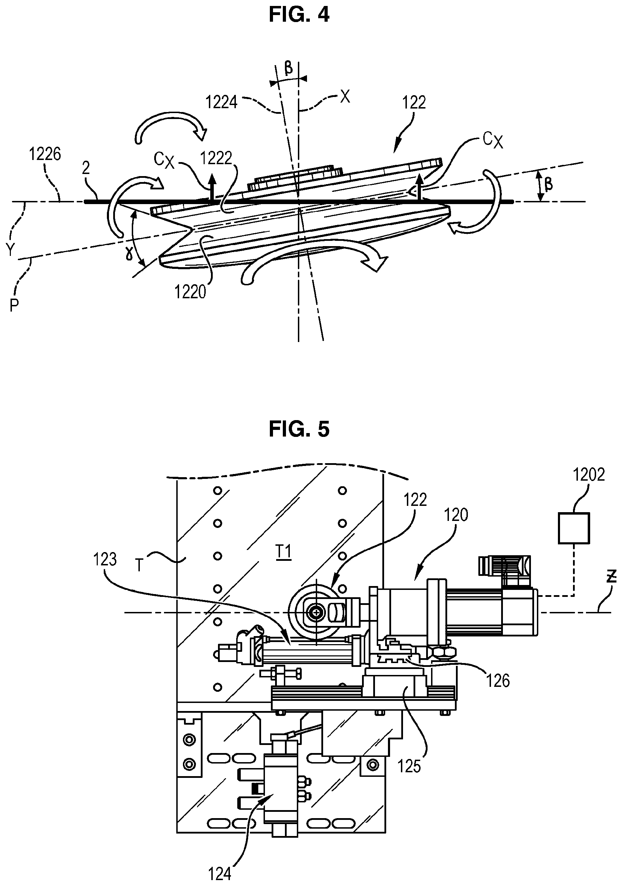

En référence à la figure 4, et selon un mode de réalisation particulier de la présente invention, le dispositif comprend deux surfaces 1220 et 1222 successives de torsion de la fibre optique 2. Ces deux surfaces successives 1220 et 1222 de torsion de la fibre optique 2 sont les deux flancs d'une rainure en forme de V le long de la périphérie d'une même poulie 122 de torsion. Préférentiellement, la rainure est en forme de V symétrique, c'est-à-dire que les deux flancs 1220 et 1222 de la rainure sont symétriques par rapport au plan P qui comprend la jonction 1223 des flancs 1220 et 1222. Le plan P est perpendiculaire à l'axe de rotation 1224 de la poulie 122. La poulie de torsion 122 est agencée de telle manière que la fibre optique ne soit pas comprise dans le plan P. En d'autres termes, l'axe de rotation de la poulie n'est pas perpendiculaire à la fibre optique et présente un angle β par rapport à l'axe X qui est l'axe horizontal perpendiculaire à la face avant T1 de la tour T (et donc au plan de la figure 3). Ce désaxement de la poulie permet aux flancs 1220 et 1220 d'être en contact avec la fibre optique 2, permettant ainsi d'engendrer des forces de friction ayant une composante Cx selon l'axe X. Cette composante Cx permet d'induire une torsion au sein de la fibre 2, c'est-à-dire que la fibre 2 présente une rotation autour d'elle-même le long de la fibre (« twist » en termes anglo-saxons). Préférentiellement, la poulie 122 est en libre rotation autour de son axe de rotation de sorte à réduire toute détérioration de la fibre optique ou de son gainage.

Une torsion est généralement définie par le nombre de vrilles (tours sur elle-même) que fait la fibre par mètre. Cette valeur peut être modifiée notamment en jouant sur la force de friction engendrée par la poulie 122 sur la fibre optique 2. La modification de la force de friction peut être engendrée en modifiant l'angle β que présente l'axe 1224 de rotation de la poulie 122 par rapport à l'axe X. En effet, plus cet angle β est grand (plus la poulie 122 est désaxée), plus la force de friction est grande, et donc plus la torsion engendrée est grande.

De manière surprenante, la présente invention permet d'une part de faire remonter les torsions en amont de la poulie 122 jusque dans le four 18 et d'autre part permet de bloquer les torsions en aval de la poulie 14, c'est-à-dire que la fibre en aval de la poulie 14 contient un nombre réduit de torsions.

Ainsi, la fibre en aval de la poulie 14 n'ayant plus de torsion rémanente (« residual twist » en termes anglo-saxons), elle peut être facilement utilisée et embobinée sans torsion rémanente. Elle ne risque donc pas d'être détériorée.

Préférentiellement, les deux flancs 1220 et 1222 de la poulie 122 de torsion présentent un angle γ compris entre 50° et 120° l'un par rapport à l'autre. Facultativement, le diamètre de la poulie 122 de torsion et le diamètre de la seconde poulie 14 de guidage sont sensiblement de même valeur, préférentiellement de 50 à 60 mm. La poulie de renvoi 16 a préférentiellement un diamètre de 60 mm (dans l'état de la technique antérieure, on utilise généralement des poulies de renvoi de plus grand diamètre, par exemple 170 mm).

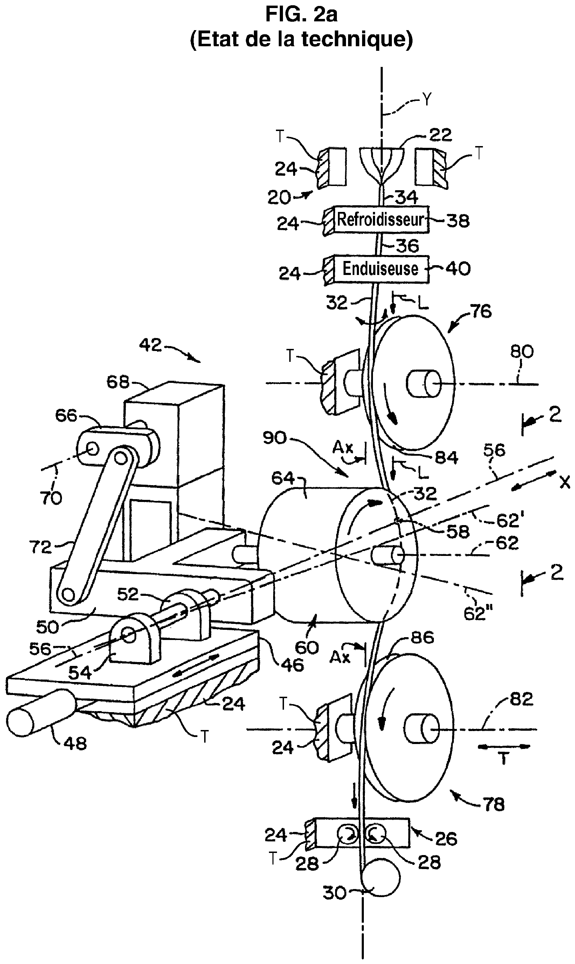

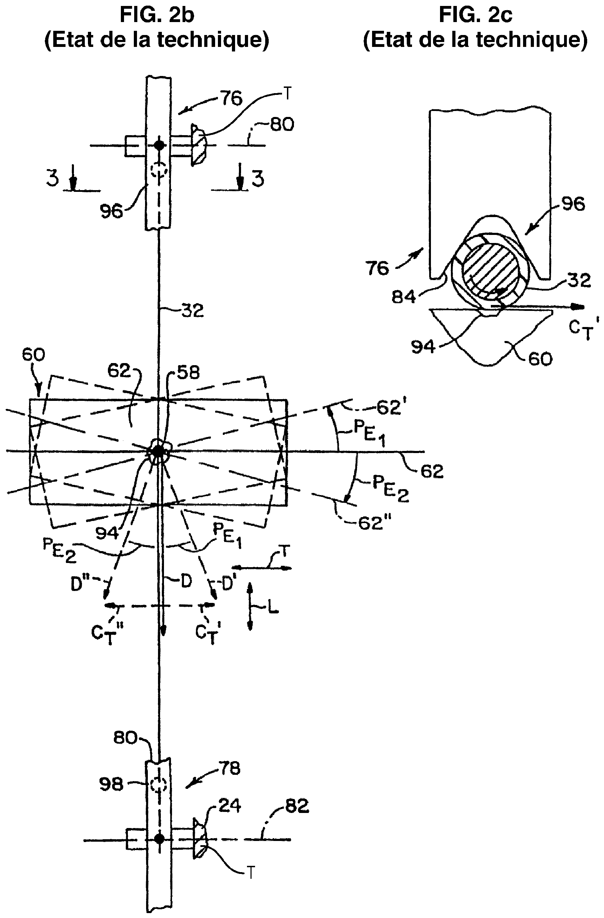

En référence à la figure 5, la poulie 122 de torsion est préférentiellement agencée sur le bras d'un servomoteur 120 de sorte que l'axe de rotation X de la poulie 122 puisse être commandé en rotation autour d'un axe horizontal Z perpendiculaire aux axes Y et X et donc parallèle au plan T1. Un avantage de l'utilisation d'un servomoteur est que la modification de l'angle que présente l'axe de rotation de la poulie 1224 par rapport à l'axe X est simple, ce qui n'est pas le cas des dispositifs connus de l'état de la technique, comme aux figures 2a à 2c, dans lesquels la modification d'un tel axe était purement mécanique (par came interposée). Ainsi, toute modification du comportement de l'axe de rotation du galet nécessitait une modification de la forme de la came. Or, le dispositif de la présente invention permet de modifier facilement l'orientation de l'axe 1224 de rotation de la poulie 122 par simple changement de la commande électrique du servomoteur 120 sans aucun autre changement mécanique.

Il a été découvert que la mise en œuvre de torsions variables aléatoires au cours du temps permettait d'éviter des défauts réguliers dans la fibre optique. En effet la régularité des défauts est aussi un facteur de dégradation de la bande passante de la fibre optique.

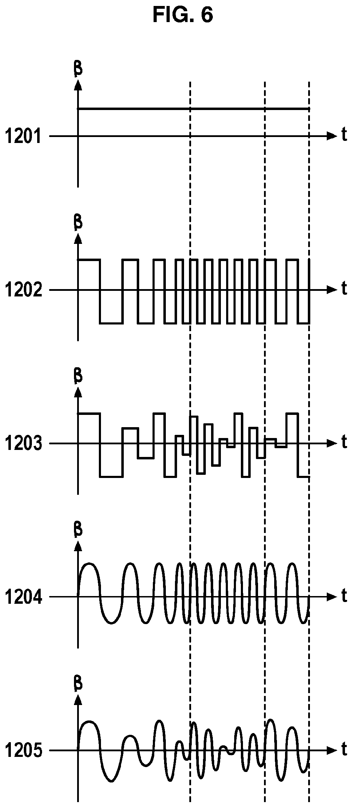

Or, avec un dispositif selon la présente invention, une telle modification de la torsion est simplifiée par la simple commande électrique du servomoteur 120 par exemple via une unité de commande 1202. A titre illustratif, la figure 6 présente différents modes de fonctionnement :
- un mode 1201 dans lequel l'angle β est fixe au cours du temps,
- un mode 1202 dans lequel l'angle β présente au cours du temps un créneau de largeur variable mais d'amplitude fixe,
- un mode 1203 dans lequel l'angle β présente au cours du temps un créneau de largeur variable et d'amplitude variable aléatoirement,
- un mode 1204 dans lequel l'angle β présente au cours du temps une sinusoïde de pulsation variable mais d'amplitude fixe,
- un mode 1205 dans lequel l'angle β présente au cours du temps une sinusoïde de pulsation variable et d'amplitude variable.

Bien évidemment, d'autres modes de modification de l'angle β de la poulie 122 sont rendus possibles par simple modification des signaux de commande du servomoteur 120. L'amplitude des variations de l'angle β est préférentiellement calculée par rapport à la vitesse de fibrage de sorte que la torsion engendrée soit préférentiellement comprise entre 0 et 12 tours/mètre.

De retour à la figure 5, le servomoteur 120 permet également une translation horizontale de la poulie 122 selon l'axe Z par rapport à la tour T de fabrication de la fibre optique 2. Pour ce faire, il est prévu par exemple de monter le servomoteur 120 sur une glissière horizontale à bille avec butée réglable 125, le servomoteur 120 étant alors réglable en position horizontale à l'aide d'un vérin pneumatique 123 commandé par une distribution pneumatique 124. Bien évidemment des capteurs de fin de course et/ou des tables micrométriques peuvent être prévus pour un retour d'information dans la commande en translation du servomoteur 120. Ainsi, il est notamment possible de donner au servomoteur 120 au moins deux positions horizontales :
- une position P0 dans laquelle la poulie 122 n'est pas en contact avec la fibre optique 2 (et donc n'engendre pas de torsion au sein de celle-ci),
- une position P1 dans laquelle la poulie 122 est en contact avec la fibre optique 2 (et donc y engendre une torsion) ; cette position est représentée à la figure 3.

A titre d'exemple, la distance d'embarrage (distance B selon l'axe Z que parcourt la fibre optique 2 provoquée par la pression de la poulie 122 selon l'axe Z en position P1) est de 50 mm.

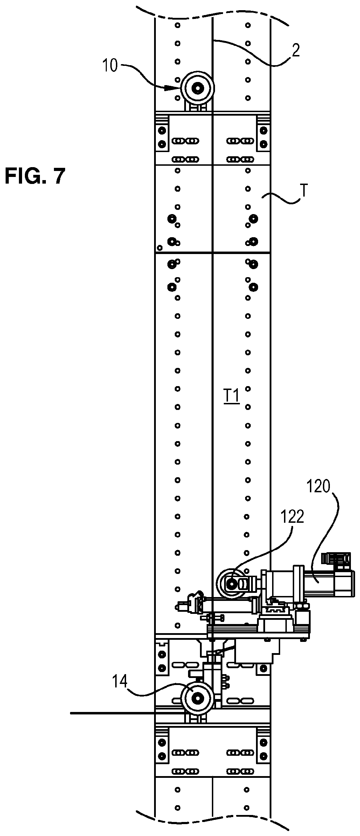

En référence à la figure 7, la position P0 est représentée. D'autre part, sur cette figure est représenté le mode de réalisation dans lequel la seconde poulie 14 et la poulie de renvoi 16 sont confondues.

## Revendications

1. Dispositif de guidage d'une fibre optique (2), destiné à être monté sur une tour verticale (T) de fabrication d'une fibre optique (2), la fibre étant générée à partir d'un four (18) situé en partie haute de la tour (T) et étant en déplacement vertical par rapport à la tour (T), vers le bas, le dispositif de guidage (1) étant situé en aval du four (18) et comprenant :
- une première poulie de guidage (10),
- au moins une surface (1220) de torsion de la fibre (2) située en aval de la première poulie de guidage (10),
- une seconde poulie de guidage (14) située en aval de la au moins une surface (1220) de torsion de la fibre (2), et
- une poulie de renvoi (16),
la distance (C) entre la première poulie de guidage (10) et la au moins une surface de torsion de la fibre (1220) étant supérieure à la distance (D) entre la au moins une surface de torsion de la fibre (1220) et la seconde poulie (14),
le dispositif étant **caractérisé en ce qu'**il comprend en outre une deuxième surface (1222) de torsion de la fibre optique (2), les deux surfaces (1220, 1222) de torsion de la fibre optique (2) étant les deux flancs d'une rainure formée dans une même poulie (122) de torsion, et **en ce que** la poulie (122) de torsion est agencée sur le bras d'un servomoteur (120) de sorte que l'axe de rotation de ladite poulie peut être commandé en rotation autour d'un axe horizontal (Z).

2. Dispositif selon la revendication 1, dans lequel le rapport entre la distance (C) entre la première poulie de guidage (10) et la au moins une surface de torsion de la fibre (1220) et la distance (D) entre la au moins une surface de torsion de la fibre (1220) et la seconde poulie (14) est compris entre 2 et 20.

3. Dispositif selon l'une des revendications 1 et 2, dans lequel la seconde poulie (14) est la poulie de renvoi (16).

4. Dispositif selon l'une des revendications 1 à 3, dans lequel l'angle qui sépare les deux flancs (1220, 1222) est compris entre 50° et 120°.

5. Dispositif selon l'une des revendications 1 à 4, dans lequel le diamètre de la poulie (122) de torsion et le diamètre de la seconde poulie (14) sont de même valeur.

6. Dispositif selon l'une des revendications 1 à 5, dans lequel le servomoteur (120) est agencé sur une liaison glissière de sorte que l'axe de rotation de la poulie peut être commandé en translation horizontale par rapport à la tour (T) de fabrication de la fibre optique (2).

7. Dispositif selon l'une des revendications 1 à 6, dans lequel le servomoteur (120) comprend une unité de commande (1202) apte à commander la rotation de l'axe de rotation de la poulie selon au moins l'un des modes suivants, la position de l'axe de rotation de la poulie (122) étant **caractérisée par** un angle (β) par rapport à un axe horizontal (X):
∘ l'angle (β) est fixe au cours du temps,
∘ l'angle (β) présente au cours du temps un créneau de largeur variable mais d'amplitude fixe,
∘ l'angle (β) présente au cours du temps un créneau de largeur variable et d'amplitude variable aléatoirement,
∘ l'angle (β) présente au cours du temps une sinusoïde de pulsation variable mais d'amplitude fixe,
∘ l'angle (β) présente au cours du temps une sinusoïde de pulsation variable et d'amplitude variable.

## Patentansprüche

1. Glasfaser-Führungsvorrichtung (2), die zum Montieren auf einem vertikalen Turm (T) zur Herstellung einer Glasfaser (2) bestimmt ist, wobei die Glasfaser aus einem Ofen (18) erzeugt ist, der am oberen Teil des Turms (T) angeordnet ist und in vertikaler Verschiebung zu dem Turm (T) nach unten bewegt, wobei die Führungsvorrichtung (1) dem Ofen (18) nachgeschaltet angeordnet ist und umfasst:
- eine erste Führungsrolle (10);
- wenigstens eine Oberfläche (1220) zum Verdrehen der Faser (2), die der ersten Führungsrolle (10) nachgeschaltet ist;
- eine zweite Führungsrolle (14), die der wenigstens einen Verdrehungs-Oberfläche der Faser (1220) nachgeschaltet ist; und
- eine Ablenkrolle (16),
wobei die Entfernung (C)zwischen der ersten Führungsrolle (10) und der wenigstens einen Verdrehungs-Oberfläche der Faser (1220) größer ist als die Entfernung (D) zwischen der wenigstens einen Verdrehungs-Oberfläche der Faser (1220) und der zweiten Rolle (14);
wobei die Vorrichtung **dadurch gekennzeichnet ist, dass** sie weiterhin eine zweite Verdrehungs-Oberfläche (1222) der Glasfaser (2) umfasst, wobei die zwei Verdrehungs-Oberflächen (1220, 1222) der Glasfaser (2) die zwei Flanken einer Rille sind, die in einer und derselben Verdrehrolle (122) gebildet sind, und dass die Verdrehungs-Rolle (122) auf dem Arm eines Servomotors (120) derart angeordnet ist, dass die Drehachse der genannten Rolle in Drehung um eine horizontale Achse (Z) gesteuert sein kann.

2. Vorrichtung gemäß Anspruch 1, wobei das Verhältnis zwischen der Entfernung (C) zwischen der ersten Führungsrolle (10) und der wenigstens einen Verdrehungs-Oberfläche der Faser (1220) und die Entfernung (D) zwischen der wenigstens einen Verdrehungs-Oberfläche der Faser (1220) und der zweiten Rolle (14) zwischen 2 und 20 inbegriffen ist.

3. Vorrichtung gemäß einem der Ansprüche 1 und 2, wobei die zweite Rolle (14) die Ablenkrolle (16) ist.

4. Vorrichtung gemäß einem der Ansprüche 1 bis 3, wobei der Winkel, der die zwei Flanken (1220, 1222) trennt, zwischen 50° und 120° beträgt.

5. Vorrichtung gemäß einem der Ansprüche 1 bis 4, wobei der Durchmesser der Verdrehrolle (122) und der Durchmesser der zweiten Rolle (14) denselben Wert aufweisen.

6. Vorrichtung gemäß einem der Ansprüche 1 bis 5, wobei der Servomotor (120) auf einer Gleitverbindung derart angeordnet ist, dass die Drehachse der Rolle in horizontaler Translation im Verhältnis zum Herstellungsturm (T) der Glasfaser (2) gesteuert sein kann.

7. Vorrichtung gemäß einem der Ansprüche 1 bis 6, wobei der Servomotor (120) eine Steuereinheit (1202) umfasst, die zum Steuern der Drehung der Drehachse der Rolle gemäß wenigstens einem der folgenden Modi in der Lage ist, wobei die Position der Drehachse der Rolle (122) durch einen Winkel β im Verhältnis zu einer horizontalen Achse (X) gekennzeichnet ist;
∘ der Winkel (β) im Zeitverlauf fix ist;
- der Winkel (β) im Zeitverlauf eine Lücke einer variablen Breite, jedoch mit fixer Amplitude aufweist;
- der Winkel (β) im Zeitverlauf eine Lücke einer variablen Breite und einer zufällig variablen Amplitude aufweist;
- der Winkel (β) im Zeitverlauf einen variablen sinusoidalen Puls, jedoch mit fixer Amplitude aufweist;
- der Winkel (β) im Zeitverlauf einen variablen sinuoisdalen Puls und einer variablen Amplitude aufweist.

## Claims

1. An optical fiber guide device (2) intended to be mounted on a vertical tower (T) for fabricating optical fiber (2), the fiber being generated from a furnace (18) located at the top part of the tower (T) and moving vertically downwards relative to the tower (T), the guide device (1) being positioned downstream of the furnace (18) and comprising:
- a first guide pulley (10);
- at least one surface (1220) for twisting the fiber (2) positioned downstream of the first guide pulley (10) ;
- a second guide pulley (14) positioned downstream of the at least one surface (1220) for twisting the fiber (2); and
- a deflecting pulley (16),
the distance (C) between the first guide pulley (10) and the at least one fiber twisting surface (1220) being greater than the distance (D) between the at least one fiber twisting surface (1220) and the second pulley (14);
the device being **characterized in that** it further comprises a second surface (1222) for twisting the optical fiber (2) wherein the two optical fiber twisting surfaces (1220, 1222) are the two sidewalls of a groove formed in one same twisting pulley (122), and **in that** the twisting pulley (122) is arranged on the arm of a servomotor (120) so that the rotational axis of the pulley can be controlled in rotation around a horizontal axis (Z).

2. The device according to claim 1, wherein the ratio between the distance (C) between the first guide pulley (10) and the at least one fiber twisting surface (1220) and the distance (D) between the at least one fiber twisting surface (1220) and the second pulley (14) is between 2 and 20.

3. The device according to one of claims 1 and 2, wherein the second pulley (14) is the deflecting pulley (16).

4. The device according to one of claims 1 to 3, wherein the angle separating the two sidewalls (1220, 1222) is between 50° and 120°.

5. The device according to one of claims 1 to 4, wherein the diameter of the twisting pulley (122) and the diameter of the second pulley (14) have the same value.

6. The device according to one of claims 1 to 5, wherein the servomotor (120) is arranged on a slide connection so that the rotational axis of the pulley can be controlled in horizontal translation relative to the tower (T) for fabricating the optical fiber (2).

7. The device according to claim 1 to 6, wherein the servomotor (120) comprises a command unit (1202) capable of controlling the rotation of the pulley's rotational axis in accordance with at least one of the following modes, the position of the rotational axis of the pulley (122) being **characterized by** an angle (β) relative to a horizontal axis (X) :
- the angle (β) is fixed over time;
- the angle (β) has a square wave of variable width over time but of fixed amplitude;
- the angle (β) has a square wave of variable width over time and of randomly variable amplitude;
- the angle (β) has a variable sinusoidal pulse over time but of fixed amplitude;
- the angle (β) has a variable sinusoidal pulse over time and of variable amplitude.
